# EUROPEAN PATENT APPLICATION

(11) **EP 4 813 771 A1**
(43) Date of publication of application: **30.09.2026**
(21) Application number: 25166720.0
(22) Date of filing: 27.03.2025
(51) Int. Cl.: B60T 17/08

(54) **SPRING BRAKE ACTUATOR FOR A PNEUMATIC BRAKING SYSTEM OF A VEHICLE, IN PARTICULAR UTILITY VEHICLE, PNEUMATIC BRAKING SYSTEM AND VEHICLE**

(71) Applicant: ZF CV Systems Europe BV, 1170 Brüssel (BE)
(72) Inventor: ZELJAS, Tomasz, 50-527 Wroclaw (PL)
(74) Representative: Ohlendorf, Henrike

(57) **Abstract**

Spring brake actuator (250) for a pneumatic braking system (210) of a vehicle (200a), in particular utility vehicle (200b), wherein the spring brake actuator (250) comprises: a housing (50) having a circumferential portion (52) and a housing base (51) with an opening (53); a brake release bolt (111), wherein the brake release bolt (111) projects through the opening (53); a nut (113) for cooperating with the brake release bolt (111); a fitting member (125) arranged at the opening (53) for positioning the brake release bolt (111); a spring member arrangement (140) arranged radially outwardly from the brake release bolt (111) and between the nut (113) and the fitting member (125) for exerting an elastic force between the nut (113) and the fitting member (125).

## Description

The disclosure relates to a spring brake actuator for a pneumatic braking system of a vehicle, in particular utility vehicle. The disclosure also relates to a pneumatic braking system of a vehicle, in particular utility vehicle, wherein the pneumatic braking system comprises a spring brake actuator, and to a vehicle, in particular utility vehicle.

Brake release mechanisms for spring brake actuators are generally known in the prior art. It is the aim of such release mechanisms to release a spring brake actuator, for example, in case of pneumatic systems malfunctions, and/or to convert energy applied by a user to compress a power spring when no pressure is applied to a chamber of spring brake actuator. The function of the release mechanism of the spring brake actuator may be needed, e.g., when a leakage occurs or due to other malfunction preventing vehicle's brake system from working properly. The release mechanism may be independent and it is possible to activate the release mechanism no matter what is happening in cooperating devices or systems.

In known brake release mechanisms, the actuator is released by rotating a brake release bolt. Such brake release bolts comprise a threaded portion on which a running nut is engaged. The running nut is allowed to only move axially within a release bolt housing. Thus, rotating the release bolt leads to an axial movement of the running nut. The axial movement of the running nut is then utilized to move a spring brake actuator piston against a force of the actuator power spring to finally release the spring brake actuator and the wheel brake as such.

For operating said brake release bolt, it is known to attach an interface nut to the operating section of the brake release bolt. The interface nut of the spring brake actuator is used to transfer a torque to the release mechanism. Any movement of the interface nut relative to the brake release bolt should be avoided, since such movement may have a negative influence on the effectiveness of releasing the spring brake actuator.

EP 4 279 349 A1 discloses a brake release mechanism for a spring brake actuator, in particular a parking or emergency spring brake actuator for use in a commercial vehicle, said release mechanism comprising a brake release bolt having a threaded portion and an operating section for operating the brake release bolt when inserted into a spring brake actuator, a running nut engaging the threaded portion, said running nut being adapted to axially travel along the threaded portion in order to move a spring brake actuator piston against a force of an actuator power spring, an interface nut attached to said operating section of the brake release bolt, wherein the interface nut and the operating section each comprise at least one bore section that form a common bore when the interface nut is attached to said operating section, and a locking element that is inserted in said bore for blocking the interface nut relative to the operating section. In particular, the locking element is configured as a locking ball.

A torque may be created by a rotation of the interface nut and the brake release bolt, which are connected, e.g., by a pin. The movement of the bolt may cause the running nut to move along an axis of the bolt. However, due to a geometrical fit with a pipe of the spring brake actuator, the running nut cannot rotate, since a thread connection forces the running nut to move translationally. The brake release bolt is only allowed to move rotationally. Due to no other thread connection and a tight placement of the brake release bolt sub-assembly in an axial direction, no other movement of the brake release bolt is possible apart from the rotation. This may be considered beneficial, since in comparison to other release mechanisms in which the brake release bolt protrudes from a cylinder of the spring brake actuator when the release mechanism is activated, an increased total device length may be prevented.

The spring brake actuator is typically constructed that a user of the vehicle cannot see what happens inside the spring brake actuator during its use. Thus, one cannot tell if the release mechanism is activated or not. This may significantly increase a risk, since even a small axial movement of the running nut may deactivate the spring brake actuator under driving conditions. To omit and/or prevent such a risk, a typically colored indicator is implemented. As a result of the cooperation of the indicator, a locking pin and an indicator mechanism spring, a user may be informed once a driving condition is not reached and/or met - then the indicator protrudes in such a situation axially from the brake release bolt. A minor movement of the running nut, e.g., of a few millimeters, may cause the indicator to pop up to protrude from the brake release bolt and inform the user about release mechanism activation.

However, the implementation of the potentially protruding indicator requires cooperating components, e.g., the running nut, and a hollow brake release bolt. Thus, this may imply complexity of the spring brake actuator and thus may decrese the cost-effectiveness of the spring brake actuator.

In the light of the prior art, it is an object of the disclosure to provide a contribution to the prior art. In particular, an object of the disclosure is to provide a brake release mechanism that is achieves reliably and cost-effectively that a user may be informed that a release mechanism is activated so that a risk of using the spring brake actuator in a condition 'not ready to drive' may be lowered.

The object is solved by the subject-matter according to independent claim 1 and according to the remaining independent claims. Dependent claims relate to preferred embodiments.

According to an aspect of the present disclosure, a spring brake actuator for a pneumatic braking system of a vehicle, in particular utility vehicle is provided, wherein the spring brake actuator comprises: a housing having a circumferential portion and a housing base with an opening; a brake release bolt, wherein the brake release bolt projects through the opening; a nut for cooperating with the brake release bolt; a fitting member arranged at the opening for positioning the brake release bolt; a spring member arrangement arranged radially outwardly from the brake release bolt and between the nut and the fitting member for exerting an elastic force between the nut and the fitting member.

The disclosure suggests an alternative kind of indication for the release mechanism being activated. Thus, an indicator, a locking pin and an indicator mechanism spring are no longer required and may be dispensed with. Instead, the disclosure suggests the spring member arrangement, for example comprising a series of disc springs, being implemented and arranged between the interface nut, also referred to as nut, and the fitting member. The spring member arrangement may further achieve that a thrust washer between the interface nut and the fitting member may be dispensed with.

In the driving position, the spring member arrangement creates an axial tension for the release mechanism: the spring member exerts an axially directed force between the nut and the fitting member and pushes the nut and the brake release bolt away from the housing base - the spring member arrangement is decompressed. This may be, e.g., visually, perceived by a user to obtain knowledge about the state of the release mechanism. The indication concept is that shape of spring member arrangement may inform the user about a driving condition. As soon as spring member arrangement is in a compressed and/or flat state it means for the user that spring brake actuator loses its functionality and cannot work in driving condition. A height reduction value, i.e., a deflection that is caused by the deflection, may be adjusted to make the state of the release mechanism more obvious.

The construction and assembly of the spring brake actuator according to the disclosure is more efficient due to decreased complexity. The spring member arrangement may reliably and cost-effectively implement an indication of the state of the release mechanism of spring brake actuator. Thus, a risk of using the spring brake actuator in a condition 'not ready to drive' may be lowered.

Optionally, spring member arrangement is adapted to exert the elastic force between the nut and the fitting member to separate the nut and the fitting member from each other. This may achieve that the spring member arrangement is used to deflect the nut compared to the fitting member to indicate the state of the release mechanism. By separating the nut and the fitting member from each other, the spring member arrangement transitions from a compressed state to a decompressed state.

Optionally, the spring brake actuator comprises a compression spring arranged within a non-pressure chamber and for actuating the spring brake actuator; and the compression spring is adapted to exert a larger force than the spring member arrangement. This may achieve that irrespective of a position that a running nut may reach, the compression spring may always exert a larger force than the spring member arrangement.

Optionally, the spring brake actuator comprises a release mechanism; and spring member arrangement is adapted to provide a tension for the release mechanism. At the beginning of an activation of the release mechanism by the compression spring, also called power spring, via a piston, a force is applied on a running nut and the tension of the spring member arrangement gets reduced and eventually removed because power spring is adapted to exert larger than the spring member arrangement.

Optionally, the brake release bolt is solid. In other words, the brake release bolt is not hollow. This may achieve that the brake release bolt may be produced more cost-effectively. Furthermore, the stiffness of the brake release bolt may be affected positively by the brake release bolt being sold.

Optionally, the spring member arrangement comprises one or more disc springs. Therein, it is realized that disc springs may be particularly cost-effective, since disc springs may be used with standardized characteristics. Therein, a plurality of disc springs may be assembled to the spring member arrangement to achieve a characteristic which is caused by the features of the individual disc springs. Alternatively or additionally, other kinds of spring-like mechanism can be considered. The spring member arrangement may comprise one or more of: wave springs, plastic bellows, steel bellows, casual springs and/or similar solutions.

Optionally, the one or more disc springs comprises a friction reduction layer. The friction reduction layer may reduce rotational friction during releasing. To omit an friction increase, in particular a disc spring may be covered with a sliding surface treatment. The friction reduction layer may reduce friction between the spring member arrangement and the fitting member and between the spring member arrangement and the nut. This may increase toward that may be applied by the spring brake actuator.

Optionally, the disc springs are implemented in series with each other. This may achieve that the stiffness and/or elastic properties of the disc springs are combined appropriately.

Optionally, the fitting member is crimped and/or mounted with a form-locking bond to the housing base. Alternatively, the fitting member and the housing base may be formed in one piece.

Optionally, the brake release bolt comprises a circumferential recess; and the spring brake actuator comprises an o-ring arranged within the recess. It is realized that the brake release bolt may perform a slight axial movement. The slide axial movement may be performed on the influence of the o-ring.

Optionally, the o-ring is countered by the fitting member. The o-ring achieves to provide tightness between the fitting member and the brake release bolt. The recess also called groove, is arranged so that the o-ring is in contact with the fitting member, irrespective of the spring member arrangement being in the compressed state or in the decompressed state.

Optionally, the brake release bolt comprises a conical section; the spring brake actuator comprises a bushing; and the bushing is arranged between the conical section and the fitting member. The bushing achieves that the brake release bolt attains a well-defined position, even though the spring member arrangement may still create tension. The bushing may provide positioning of the brake release bolt and may avoid, in conjunction with the fitting member, the brake release bolt to move too far out.

According to an aspect of the disclosure, a pneumatic braking system of a vehicle, in particular utility vehicle, is provided, wherein the pneumatic braking system comprises the spring brake actuator according to the disclosure. Optionally, the spring brake actuator comprises one or more features as described as optional and/or preferred to achieve a technical effect corresponding thereto.

According to an aspect of the disclosure, a vehicle, in particular utility vehicle, is provided. The vehicle, in particular utility vehicle, comprises the pneumatic braking system according to the disclosure and/or the spring brake actuator according to the disclosure. Optionally, the pneumatic braking system and/or the spring brake actuator comprises one or more features as described as optional and/or preferred to achieve a technical effect corresponding thereto.

Further advantages and technical features and their technical effects are disclosed in the figures and the description thereof.

The figures show preferred embodiments as follows:
Fig. 1 a schematic of a vehicle, in particular utility vehicle, according to an embodiment of the disclosure;
Fig. 2 a perspective view of a spring brake actuator;
Fig. 3 a detail of a sectional view of a spring brake actuator;
Fig. 4 a detail of a perspective view of a spring brake actuator;
Fig. 5 a detail of a sectional view of a spring brake actuator according to an embodiment of the disclosure;
Fig. 6 a detail of a perspective view of a spring brake actuator;
Fig. 7 a detail of a sectional view of a spring brake actuator according to an embodiment of the disclosure;
Fig. 8 a detail of a perspective view of a spring brake actuator according to an embodiment of the disclosure;
Fig. 9 a detail of a sectional view of a spring brake actuator according to an embodiment of the disclosure;
Fig. 10 a detail of a perspective view of a spring brake actuator according to an embodiment of the disclosure;
Fig. 11 a detail of a sectional view of a spring brake actuator according to an embodiment of the disclosure;
Fig. 12 a detail of a perspective view of a spring brake actuator according to an embodiment of the disclosure; and
Fig. 13 a perspective view of a spring member arrangement of a spring brake actuator according to an embodiment of the disclosure.

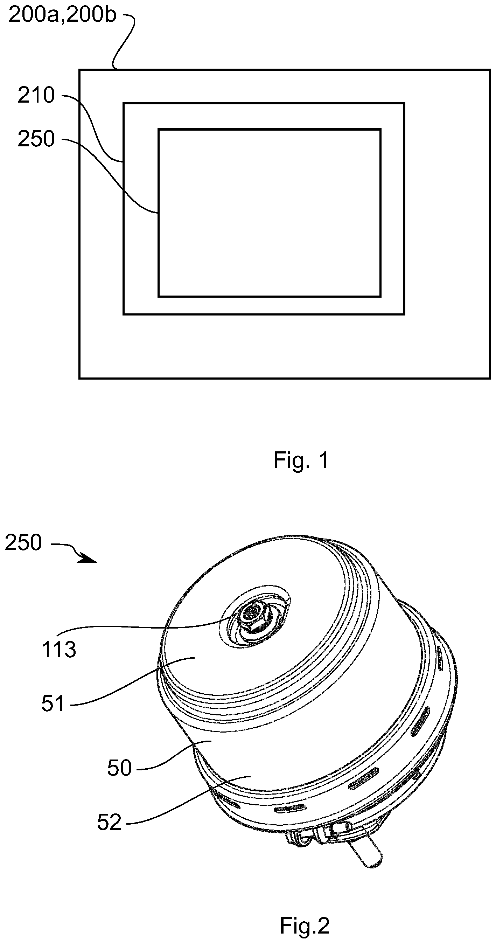

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a bus, a truck and/or towing vehicle of a vehicle combination.

The vehicle 200a, 200b comprises a pneumatic braking system 210. The pneumatic braking system 210 is adapted to be actuated by a driver of the vehicle 200a, 200b and/or by an autonomous driving function of the vehicle 200a, 200b to apply and/or release a braking torque.

The pneumatic braking system comprises a spring brake actuator 250. The spring brake actuator 250 is adapted to apply and release in particular a parking brake and/or an emergency brake, in particular in the event of a loss of air pressure and/or when actuated by the driver and/or by an autonomous driving function.

Spring brake actuators 250 and features thereof are further described with reference to Figures 2 to 13.

Figure 2 shows a perspective view of a spring brake actuator 250 according to an embodiment of the disclosure. The spring brake actuator 250 of Figure 2 is a spring brake actuator 250 for a pneumatic braking system 210 of a vehicle 200a, 200b. Such a vehicle 200a, 200b and braking system 210 is described with reference to Figure 1. Figure 2 is described under reference to Figure 1.

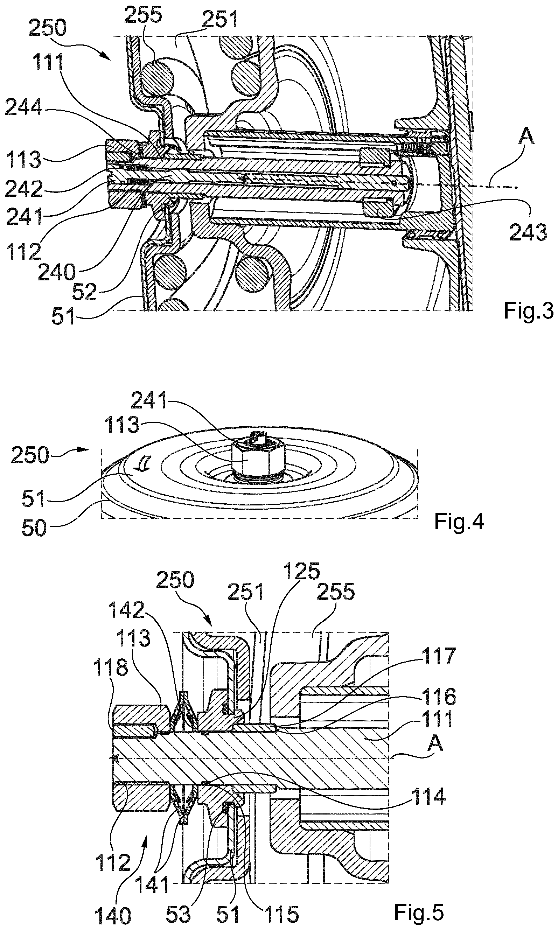

The spring brake actuator 250 of Figure 2 comprises a housing 50. The housing 50 comprises a circumferential portion 52 and a housing base 51 with an opening 53 (see Figures 3, 5, 7, 9 and 11). Thus, the housing 50 is essentially cylindrical. The housing 50 is made of sheet metal.

The spring brake actuator 250 comprises an interface nut 113. The nut 113 is adapted to cooperate with a brake release bolt 111 (see Figures 3 to 12) of the spring brake actuator 250. Therein, a movement of the brake release bolt 111 reciprocates the nut 113.

The spring brake actuator 250 is described with reference to Figures 3 and 4 in further detail.

Figure 3 shows a detail of a sectional view of a spring brake actuator 250. The spring brake actuator 250 of Figure 3 is the spring brake actuator 250 as shown in Figure 2. Figure 3 is described under reference to Figures 1 and 2.

The spring brake actuator 250 comprises the brake release bolt 111. The brake release bolt 111 is adapted to move along an axial direction A. The brake release bolt 111 is elongated in the axial direction A.

The brake release bolt 111 projects through the opening 53. I.e., a portion of the brake release bolt 111 may, depending on the deflection of the brake release bolt 111, protrude from the opening 53.

The brake release bolt 111 comprises a thread 112. The thread 112 is arranged circumferentially around the brake release bolt 111. The thread 112 is arranged at the portion of the brake release bolt 111 which protrudes from the opening 53.

The spring brake actuator 250 comprises a nut 113, i.e., a fastener with a threaded hole. The nut 113 comprises an internal thread (not indicated) for cooperating with the thread 112 of the brake release bolt 111. I.e., the internal thread is arranged at an inner circumferential section of the nut 113. The brake release bolt 111 and the nut 113 are fixated to each other by a cooperation of the thread 112 and the internal thread. I.e., the nut 113 is screwed and/or wound on the brake release bolt 111 so that the thread 112 and the internal thread 114 enable keeping the brake release bolt 111 and the nut 113 together. A motion between the brake release bolt 111 and the nut 113 is locked by a locking member 113. The locking member 113 is a pin.

The brake release bolt 111 is hollow. I.e., the reckless bolt 111 comprises a through hole. The spring brake actuator 250 comprises a locking pin 240 with an indicator 241, an indicator mechanism spring 242, a running nut 243 and a thrust washer 244. The locking pin 240 is adapted to indicate the state of a release mechanism of the spring brake actuator 250. The locking pin 240 and the indicator mechanism spring 242 is arranged within the brake release bolt 111, i.e., within the through hole of the reckless bolt 111. Therein, the indicator mechanism spring 242 is adapted to push the locking pin 242 move axially so that the indicator 241 protrudes along the access A from the interface nut 113, see Figure 4.

Figure 4 shows a detail of a perspective view of a spring brake actuator 250. The spring brake actuator 250 of figure 4 is the spring brake actuator 250 of Figure 3. Therein, the indicator 241 is in a state to indicate that the release mechanism of the spring brake actuator 250 is applied.

Figure 5 shows a detail of a sectional view of a spring brake actuator 250 according to an embodiment of the disclosure. The spring brake actuator 250 of Figure 5 is a spring brake actuator 250 for a pneumatic braking system 210 of a vehicle 200a, in particular utility vehicle 200b. The spring brake actuator 250 of Figure 5 is an alternative to the spring brake actuator 250 of Figures 3 and 4. Figure 5 is described under reference to Figures 1 to 4.

The spring brake actuator 250 comprises a housing 50 having a circumferential portion 52 and a housing base 51 with an opening 53. The housing 50 is described with reference to Figures 2 to 4.

The spring brake actuator 250 of Figure 5 comprises a brake release bolt 111. The brake release bolt 111 is solid. I.e., the brake release bolt 111 is a solid, non-hollow bolt.

The brake release bolt 111 projects through the opening 53. The spring brake actuator 250 comprises a nut 113 for cooperating with the brake release bolt 111 as described with reference to Figures 2 to 4.

The spring brake actuator 250 of Figure 5 comprises a fitting member 125 arranged at the opening 53 for positioning the brake release bolt 111. The fitting member 125 is arranged radially outwardly from the brake release bolt 111. The fitting member 125 is crimped and/or mounted with a form-locking bond to the housing base 51.

The brake release bolt 111 comprises a circumferential recess 114. The recess 114 is a ring-shaped groove that extends around a second appearance perpendicular to the axial direction A. The spring brake actuator 250 comprises an o-ring 115 arranged within the recess 114. The o-ring 115 is countered by the fitting member 125. I.e., the recess 114 and the fitting member 125 are arranged so that the o-ring 115 and the fitting member 125 are in contact, irrespective of the brake release bolt 111 being in the retracted and/or in a protruded position and thus irrespective of the state of a release mechanism of the spring brake actuator 250.

The brake release bolt 111 comprises a conical section 116. The spring brake actuator 250 comprises a bushing 117. At the conical section 116 a diameter and/or radius of the brake release bolt 111 changes. Alternatively (not shown) the conical section 116 may be replaced by a step of the diameter and/or the radius of the brake release bolt 111. The bushing 117 is arranged between the conical section 116 and the fitting member 125.

The spring brake actuator 250 comprises a spring member arrangement 140 arranged radially outwardly from the brake release bolt 111 and between the nut 113 and the fitting member 125 for exerting an elastic force between the nut 113 and the fitting member 125. The radially outwardly arrangement of the spring member arrangement 140 relates to the radius (not indicated) that is perpendicular to the axial direction A. The arrangement of the spring member arrangement 140 between the fitting member 125 and the nut 113 relates to the axial direction A. The elastic force means that the spring member arrangement 140 may attain a compressed state in which a comparatively large force may be generated by the spring member arrangement 140, and the spring member arrangement 140 may attain a decompressed state in which a comparatively low force may be generated by the spring member arrangement 140. The spring member arrangement 140 is adapted to exert the elastic force between the nut 113 and the fitting member 125 to separate the nut 113 and the fitting member 125 from each other. When the spring member arrangement 140 transitions from the decompressed state into the compressed state, the bushing 117 may gains a degree of freedom so that the bushing 117 may move axially by a distance of the total compression. The fit of the bushing 117 on the brake release bolt 111 allows the brake release bolt 111 to attain the exact same position each time the spring member arrangement 140 gets decompressed.

the spring brake actuator 250 comprises a release mechanism. The spring brake actuator 250 comprises a compression spring 255 arranged within a non-pressure chamber 251 and for actuating the spring brake actuator 250. The release mechanism is performed under a decompression of the compression spring 255. The compression spring 255 is adapted to exert a larger force than the spring member arrangement 140. Thus, the functioning of the release mechanism is not affected by the spring member arrangement 140. The spring member arrangement 140 is adapted to provide a tension for the release mechanism. I.e., the force that is exerted by the spring member arrangement 140 is opposite to a force that is exerted by the compression spring 255.

The spring member arrangement 140 comprises a plurality of two disc springs 141. In another embodiment (not shown), and are a number of disc springs 141 may be provided. For example, a spring arrangement 140 may comprise a single disc spring 141 and/or more than two disc springs 141. The disc springs 141 are implemented in series with each other. I.e., along the axial direction A, the disc springs 141 are arranged in series and adjacent to each other. Therein, the orientation of adjacent disc springs 141 may be inverted to achieve a proper contacting between each pair of disc springs 141.

The disc springs 141 comprises a friction reduction layer 142. The friction reduction layer 142 may be arranged at the entire surface of the disc springs 141. Alternatively, the friction reduction layer 142 may be arranged at a contact surface for contacting the fitting member 125 and/or the nut 113.

Figure 5 indicates the spring member arrangement 140 in a decompressed state. Therein, the brake release bolt 111 and the nut 113 protrudes from the housing base 51.

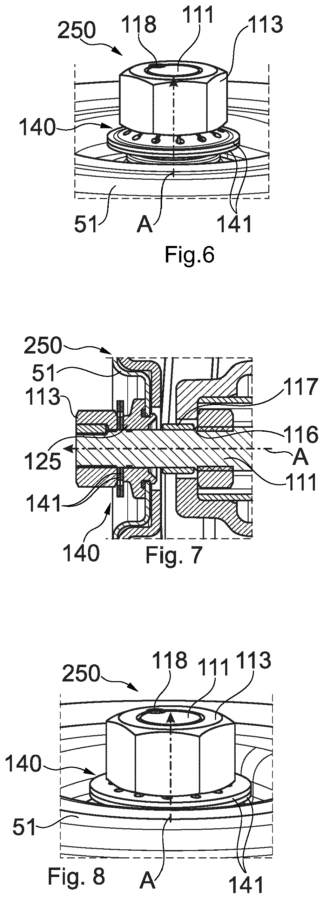

Figure 6 shows a detail of a perspective view of a spring brake actuator 250. Figure 6 is a perspective view of Figure 5.

Figure 7 shows a detail of a sectional view of a spring brake actuator 250 according to an embodiment of the disclosure. The spring brake actuator 250 of Figure 7 is the spring brake actuator of Figures 5 and 6. In Figure 7, the spring member arrangement 140 is in a compressed state. Therein, the disc springs 141 are essentially flat. The brake release bolt 111 and nut 113 do protrude less from the housing base 51 compared to the decompressed state.

Figure 8 shows a detail of a perspective view of a spring brake actuator 250 according to an embodiment of the disclosure. Figure 8 is a perspective view of Figure 7.

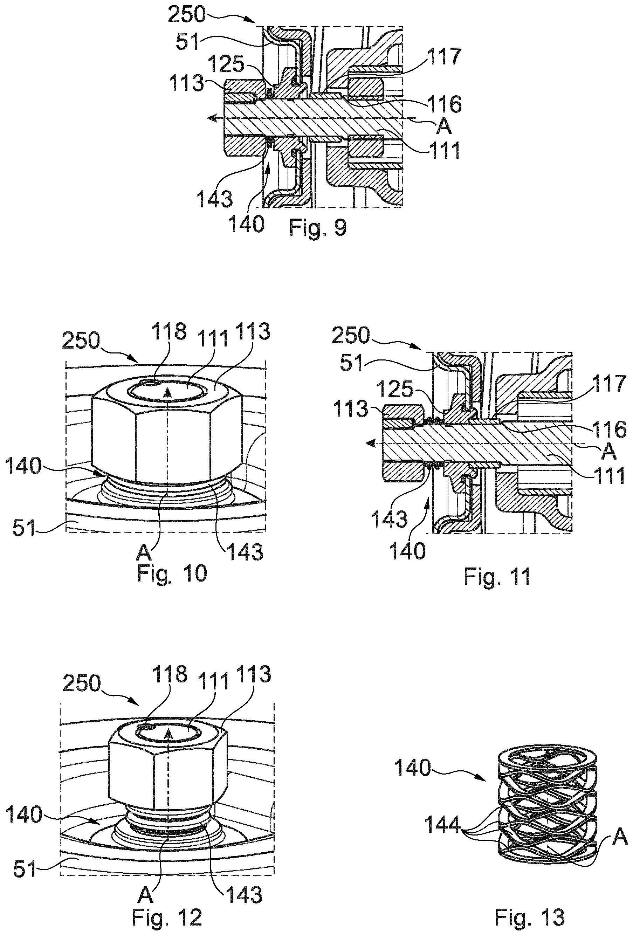

Figure 9 shows a detail of a sectional view of a spring brake actuator 250 according to an embodiment of the disclosure. The spring brake actuator 250 of Figure 9 is an alternative to the spring brake actuator 250 of Figures 5 to 8. Figure 9 is described under reference to Figures 5 to 8.

The spring member arrangement 140 comprises a single bellow 143. In Figure 9, the spring member arrangement 140 is in a compressed state.

Figure 10 shows a detail of a perspective view of a spring brake actuator 250 according to an embodiment of the disclosure. Figure 10 is a perspective view of Figure 9.

Figure 11 shows a detail of a sectional view of a spring brake actuator 250 according to an embodiment of the disclosure. The spring brake actuator 250 of Figure 11 is the spring brake actuator of Figures 9 and 10.

In Figure 11, the spring member arrangement 140 is in a decompressed state.

Figure 12 shows a detail of a perspective view of a spring brake actuator 250 according to an embodiment of the disclosure. Figure 12 is a perspective view of Figure 11.

Figure 13 shows a perspective view of a spring member arrangement 140 of a spring brake actuator 250 according to an embodiment of the disclosure. The spring member arrangement 140 comprises a series of wave springs 144.

### List of reference signs (part of the description)

- A: axial direction

- 50: housing
- 51: housing base
- 52: circumferential portion
- 53: opening

- 111: brake release bolt
- 112: thread
- 113: nut
- 114: recess
- 115: o-ring
- 116: conical section
- 117: bushing
- 118: locking member
- 125: fitting member
- 140: spring member arrangement
- 141: disc spring
- 142: friction reduction layer
- 143: bellow
- 144: wave spring

- 200a: vehicle
- 200b: utility vehicle
- 210: pneumatic braking system

- 240: locking pin
- 241: indicator
- 242: indicator mechanism spring
- 243: running nut
- 244: thrust washer
- 250: spring brake actuator
- 251: non-pressure chamber
- 255: compression spring

## Claims

1. Spring brake actuator (250) for a pneumatic braking system (210) of a vehicle (200a), in particular utility vehicle (200b), wherein the spring brake actuator (250) comprises:
- a housing (50) having a circumferential portion (52) and a housing base (51) with an opening (53);
- a brake release bolt (111), wherein the brake release bolt (111) projects through the opening (53);
- a nut (113) for cooperating with the brake release bolt (111);
- a fitting member (125) arranged at the opening (53) for positioning the brake release bolt (111); **characterized in that**,
- a spring member arrangement (140) arranged radially outwardly from the brake release bolt (111) and between the nut (113) and the fitting member (125) for exerting an elastic force between the nut (113) and the fitting member (125).

2. Spring brake actuator (250) as claimed in claim 1, wherein
- spring member arrangement (140) is adapted to exert the elastic force between the nut (113) and the fitting member (125) to separate the nut (113) and the fitting member (125) from each other.

3. Spring brake actuator (250) as claimed in claim 1 or 2, wherein
- the spring brake actuator (250) comprises a compression spring (255) arranged within a non-pressure chamber (251) and for actuating the spring brake actuator (250); and
- the compression spring (255) is adapted to exert a larger force than the spring member arrangement (140).

4. Spring brake actuator (250) as claimed in any one of the preceding claims, wherein
- the spring brake actuator (250) comprises a release mechanism; and
- spring member arrangement (140) is adapted to provide a tension for the release mechanism.

5. Spring brake actuator (250) as claimed in any one of the preceding claims, wherein
- the brake release bolt (111) is solid.

6. Spring brake actuator (250) as claimed in any one of the preceding claims, wherein
- the spring member arrangement (140) comprises one or more disc springs (141).

7. Spring brake actuator (250) as claimed in claim 6, wherein
- the one or more disc springs (141) comprises a friction reduction layer (142).

8. Spring brake actuator (250) as claimed in claim 6 or 7, wherein
- the disc springs (141) are implemented in series with each other.

9. Spring brake actuator (250) as claimed in any one of the preceding claims, wherein
- the fitting member (125) is crimped and/or mounted with a form-locking bond to the housing base (51).

10. Spring brake actuator (250) as claimed in any one of the preceding claims, wherein
- the brake release bolt (111) comprises a circumferential recess (114); and
- the spring brake actuator (250) comprises an o-ring (115) arranged within the recess (114).

11. Spring brake actuator (250) as claimed in claim 10, wherein
- the o-ring (115) is countered by the fitting member (125).

12. Spring brake actuator (250) as claimed in any one of the preceding claims, wherein
- the brake release bolt (111) comprises a conical section (116);
- the spring brake actuator (250) comprises a bushing (117); and
- the bushing (117) is arranged between the conical section (116) and the fitting member (125).

13. Pneumatic braking system (210) of a vehicle (200a), in particular utility vehicle (200b), comprising a spring brake actuator (250) as claimed in any one of the preceding claims.

14. Vehicle (200a), in particular utility vehicle (200b), comprising a spring brake actuator (250) as claimed of claims 1 to 12 and/or a pneumatic braking system (210) as claimed in claim 13.
